# EUROPEAN PATENT APPLICATION

(11) **EP 4 535 744 A1**
(43) Date of publication of application: **09.04.2025**
(21) Application number: 23826307.3
(22) Date of filing: 16.06.2023
(51) Int. Cl.: H04L 41/0803, H04L 69/08, H02J 3/38

(54) **CONFIGURATION METHOD FOR PHOTOVOLTAIC SYSTEM, CENTER SUPERVISE UNIT, AND STORAGE MEDIUM**

(30) Priority: 21.06.2022 CN 202210703649
(71) Applicant: ZTE Corporation, Shenzhen, Guangdong 518057 (CN)
(72) Inventor: XIONG, Yong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/100794
(87) International publication number: WO 2023/246658

(57) **Abstract**

Disclosed in the present application are a configuration method for a photovoltaic system, a center supervise unit, and a storage medium. The configuration method comprises: obtaining serial numbers of photovoltaic cells (S100); selecting the serial number of one photovoltaic cell each time as a target serial number, broadcasting a sequence instruction having the target serial number to nodes in a photovoltaic system, and receiving current values output by the nodes according to the sequence instruction until the serial numbers of all the photovoltaic cells are traversed (S200); and dividing the photovoltaic cell, a photovoltaic convergence box, and a protocol conversion unit which output the same current value in each broadcast into one group to obtain grouping information of all nodes in the photovoltaic system (S300).

## Description

### CROSS-REFERENCE TO RELATED APPLICATIONS

The present application is proposed based on and claims priority to the Chinese Patent Application No. 202210703649.4, filed on June 21, 2022, which is incorporated herein by reference in its entirety.

### TECHNICAL FIELD

The present application relates to the technical field of photovoltaics, in particular to a configuration method for a photovoltaic system, a center supervise unit, and a storage medium.

### BACKGROUND

With popularization of a 5G technology, 5G network construction has emerged worldwide. In the aspect of 5G network deployment, due to increase of power consumption of a site, difficult introduction of electricity, increase of demands for power supply devices and battery storage, increase of the number of sites and the like, increase of power consumption of a network operation site, and surge of maintenance cost and electricity fee are caused, so change of a 5G network architecture has brought a new challenge to a communication power supply network. For coping with the above challenge, an operator has generally selected a solution of photovoltaic superposition in a site power supply, namely, photovoltaic systems are superposed in a conventional communication power supply so as to supply power jointly, solve problems of increase of the power consumption of the site, difficult introduction of the electricity and the like, reduce consumption of the mains supply and reduce carbon emission.

However, when a capacity of the photovoltaic system is large, network configuration needs to be performed on a node device in the photovoltaic system, and thus grouping management for the photovoltaic system is achieved. Common grouping methods include dial-up grouping, code-matching grouping, grouping electrifying, a receiving information intensity indicator recognition method and the like. Dial-up grouping and code-matching grouping need manual operation, the number of groups is limited, and dial-up errors are prone to occurring. Grouping electrifying needs repeated hot-line works, so potential safety hazards exist. The receiving information intensity indicator recognition method needs a lot of cost. Therefore, it is quite important to find a safe, low-cost, and less error-prone grouping method.

### SUMMARY

Embodiments of the present application provide a configuration method for a photovoltaic system, a center supervise unit, and a storage medium.

In a first aspect, an embodiment of the present application provides a configuration method for a photovoltaic system. The photovoltaic system includes smart photovoltaic units (SPUs) serving as nodes for networking, a photovoltaic convergence box (PCB) and a smart protocol convert unit (SPCU). The configuration method includes: obtaining serial numbers of the smart photovoltaic units; selecting the serial number of one smart photovoltaic unit each time as a target serial number, broadcasting a sequence instruction carrying the target serial number to nodes in the photovoltaic system, and receiving current values output by the nodes in the photovoltaic system according to the sequence instruction until the serial numbers of all the smart photovoltaic units are traversed; wherein the sequence instruction is used to instruct the only smart photovoltaic unit having the target serial number in the photovoltaic system to open a power output; and dividing the smart photovoltaic unit, the photovoltaic convergence box, and the protocol conversion unit which output the same current value in each broadcast into one group to obtain grouping information of all nodes in the photovoltaic system.

In a second aspect, a center supervise unit (CSU) includes at least one processor and a memory configured to be in communication connection with the at least one processor; and the memory stores an instruction capable of being performed by the at least one processor, and the instruction is performed by the at least one processor so that the at least one processor can perform the configuration method for a photovoltaic system in the first aspect.

In a third aspect, an embodiment of the present application provides a computer-readable storage medium, the computer-readable storage medium stores a computer-executable instruction, and the computer-executable instruction is used to cause a computer to perform the configuration method for a photovoltaic system in the first aspect.

### BRIEF DESCRIPTION OF DRAWINGS

Fig. 1 is a schematic diagram of system architecture of a photovoltaic system provided by an embodiment of the present application.
Fig. 2 is a flowchart of a configuration method for a photovoltaic system provided by an embodiment of the present application.
Fig. 3 is a flowchart of a specific method of step S100 in Fig. 2.
Fig. 4 is a flowchart of a specific method of step S300 in Fig. 2.
Fig. 5 is a flowchart of a configuration method for a photovoltaic system provided by another embodiment of the present application.
Fig. 6 is a flowchart of a specific method of step S400 in Fig. 5.
Fig. 7 is a flowchart of a configuration method for a photovoltaic system provided by another embodiment of the present application.
Fig. 8 is a flowchart of a specific method of step S800 in Fig. 7.
Fig. 9 is a flowchart of a specific method of step S820 in Fig. 8.
Fig. 10 is a flowchart of a specific method of step S824 in Fig. 9.
Fig. 11 is a flowchart of a specific method of step S700 in Fig. 9.
Fig. 12 is a flowchart of a specific method of step S720 in Fig. 11.
Fig. 13 is a flowchart of a configuration method for a photovoltaic system provided by another embodiment of the present application.
Fig. 14 is a flowchart of a specific method of step S4000 in Fig. 13.
Fig. 15 is a schematic diagram of a node configuration table provided by a specific example of the present application.
Fig. 16 is a schematic diagram of a node configuration table provided by another specific example of the present application.
Fig. 17 is a schematic diagram of a node configuration table provided by another specific example of the present application.
Fig. 18 is a schematic structural diagram of a center supervise unit provided by an embodiment of the present application.

### DETAILED DESCRIPTION

To make the objectives, technical solutions, and advantages of the present application clearer, the following further describes the present application in detail with reference to the accompanying drawings and embodiments. It is to be understood that specific embodiments described here are merely for explaining the present application instead of limiting the present application.

It needs to be noted that in the description of the embodiments of the present application, terms such as "first" and "second" in the specification, claims and the above accompanying drawings are used for distinguishing similar objects instead of being understood as indicating or implying a relative significance or implicitly indicating the quantity or a precedence relationship of referred to technical features. "At least one" refers to one or more, and "a plurality of" means two or more than two. "And/or" describes an association relationship between associated objects and represents that there may be three relationships, for example, A and/or B, which represents that merely A exists, both A and B exist, and merely B exists. A or B may be singular or plural. A character "/" generally represents an "or" relationship between associated objects before and after the character. Though dividing of functional modules is performed in a schematic diagram of an apparatus and a logic sequence is shown in the flowcharts, in some cases, the steps shown or described may be performed by module dividing different from that of the apparatus or in a sequence different from that in the flowcharts.

Besides, technical features involved in different implementations of the present application described below may be combined mutually without a conflict between one another.

Embodiments of the present application provide a configuration method for a photovoltaic system, a center supervise unit, and a computer-readable storage medium. The configuration method includes: obtaining serial numbers of smart photovoltaic units; selecting the serial number of one smart photovoltaic unit each time as a target serial number, broadcasting a sequence instruction carrying the target serial number to nodes in a photovoltaic system so as to cause each smart photovoltaic unit to compare the serial number thereof with the target serial number, start the smart photovoltaic unit corresponding to the target serial number and shut other smart photovoltaic units, and then receiving current values output by the nodes in the photovoltaic system according to the sequence instruction until the serial numbers of all the smart photovoltaic units are traversed, so as to avoid a problem of omitting the smart photovoltaic units; and finally, dividing the smart photovoltaic unit, a photovoltaic convergence box, and a smart protocol convert unit which output the same current value in each broadcast into one group to obtain grouping information of all nodes in the photovoltaic system, so as to achieve accurate grouping for the photovoltaic system.

The embodiments of the present application are further described below with reference to the accompanying drawings.

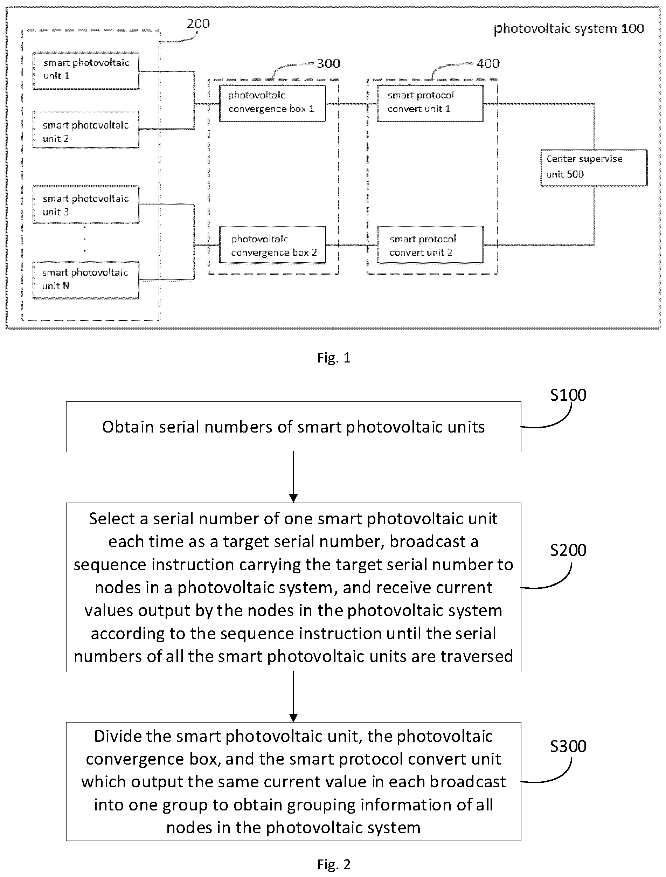

Refer to Fig. 1, which is a schematic diagram of system architecture of a photovoltaic system provided by an embodiment of the present application.

In the embodiment of Fig. 1, the photovoltaic system 100 includes smart photovoltaic units 200 serving as nodes for networking, a photovoltaic convergence box 300, a smart protocol convert unit 400 and a center supervise unit 500.

In an embodiment, the plurality of smart photovoltaic units 200 are electrically connected and converged to the photovoltaic convergence box 300 and then connected into the smart protocol convert unit 400 to form one group of sub-system, a plurality of groups of the sub-systems and one center supervise unit 500 form a complete photovoltaic system 100, and thus the group of sub-system is composed of a photovoltaic convergence box 300, a smart protocol convert unit 400 and at least one smart photovoltaic unit 200.

It may be understood that as shown in Fig. 1, Fig. 1 includes two groups of sub-systems, the first group of sub-system includes a smart photovoltaic unit 1, a smart photovoltaic unit 2, a photovoltaic convergence box 1 and a smart protocol convert unit 1, the second group of sub-system includes a smart photovoltaic unit 3 to a smart photovoltaic unit N, a photovoltaic convergence box 2 and a smart protocol convert unit 2, and the first group of sub-system, the second group of sub-system and the center supervise unit 500 form the photovoltaic system 100.

It needs to be noted that in the photovoltaic system 100, the smart photovoltaic units 200, the photovoltaic convergence box 300 and the smart protocol convert unit 400 are connected through power line communication (PLC), the smart protocol convert unit 400 and the center supervise unit 500 are connected through a field bus such as a controller area network (CAN) or RS485, moreover, interaction and management of all the smart photovoltaic units 200, the photovoltaic convergence box 300 and the smart protocol convert unit 400 are achieved through power line communication, so that communication cost is reduced.

In an embodiment, the smart photovoltaic unit 200 may implement maximum power point tracking (MPPT) algorithm, and the photovoltaic system 100 is caused to perform outputting in maximum power so as to charge a storage battery by detecting a generating voltage of a solar panel in real time and tracking a maximum voltage current value. In a case that the photovoltaic convergence box 300, which only has simple convergence and lightning protection functions, is usually a non-intelligent version and does not need to access to a PLC network. In a case that the photovoltaic convergence box 300, which has functions of data acquisition, failure alarm and the like, is usually an intelligent version and needs to access to the PLC network, acquisition of an output current needs to be increased.

The photovoltaic system 100 and an application scene described in the embodiment of the present application are for more clearly describing the technical solution of the embodiment of the present application instead of constituting a limitation on the technical solution provided by the embodiment of the present application. Those skilled in the art may know that with evolution of a network topology and emergence of a new application scene, the technical solution provided by the embodiment of the present application is also suitable for similar technical problems.

Those skilled in the art may understand that the photovoltaic system shown in Fig. 1 does not constitute the limitation on the embodiment of the present application and may include more or less components than those shown in the figure, or a combination of some components or different arrangements of components.

Based on the structure of the above system architecture, various embodiments of the configuration method for the photovoltaic system in the present application are proposed below.

Refer to Fig. 2, which is a flowchart of a configuration method for a photovoltaic system provided by an embodiment of the present application. The configuration method for the photovoltaic system includes but is not limited to steps S100 to S300.

Step S100: serial numbers of smart photovoltaic units are obtained.

It needs to be noted that the serial number of each smart photovoltaic unit, a serial number of the photovoltaic convergence box and a serial number of the smart protocol convert unit in the present embodiment are device serial numbers (DSNs) of the nodes, and as the DSN is a unique identifier of a device, the DSN is selected as the serial number of each node, so that accuracy of grouping recognition can be improved.

In an embodiment, each SPU and each PCB actively broadcast through the PLC network and each SPCU actively broadcasts through a CAN bus the serial number of the CSU, so that a network configuration table is generated conveniently later.

Step S200: the serial number of one smart photovoltaic unit is selected each time as a target serial number, a sequence instruction carrying the target serial number is broadcast to nodes in the photovoltaic system, and current values output by the nodes in the photovoltaic system according to the sequence instruction is received until the serial numbers of all the smart photovoltaic units are traversed.

It needs to be noted that the sequence instruction is used to instruct the only smart photovoltaic unit having the target serial number in the photovoltaic system to open a power output.

In an embodiment, the serial number of one smart photovoltaic unit is selected each time as the target serial number, the smart protocol convert unit is informed of the target serial number, the sequence instruction carrying the target serial number is broadcast to the nodes in the photovoltaic system through the smart protocol convert unit, the only smart photovoltaic unit having the target serial number in the photovoltaic system is instructed to open the power output, the other smart photovoltaic units close the power output, and thus the CSU receives the current values output by the nodes in the photovoltaic system according to the sequence instruction until the serial numbers of all the smart photovoltaic units are traversed.

It may be understood that selection of the target serial number may be performed after ranking according to a size of the DSNs, the DSNs of all the smart photovoltaic units are ranked according to the size to obtain a sequence table, then the first DSN is selected from the sequence table as the target serial number for traversing until all the DSNs in the sequence table are traversed; or selection is performed after ranking according to character string prefixes of the DSNs, the DSNs of all the smart photovoltaic units are ranked according to types of the character string prefixes to obtain a sequence table, and then the first DSN is selected from the sequence table as the target serial number for traversing until all the DSNs in the sequence table are traversed.

Step S300: the smart photovoltaic unit, the photovoltaic convergence box, and the smart protocol convert unit which output the same current value in each broadcast are divided into one group to obtain grouping information of all nodes in the photovoltaic system.

In an embodiment, the SPCU, the PCB and the SPU which output the same current value in each broadcast are divided into one group to obtain grouping information of all the nodes in the photovoltaic system, and preliminary grouping for all the nodes is implemented.

It may be understood that the SPCU, the PCB and the SPU of the same current value are connected in series in the same group.

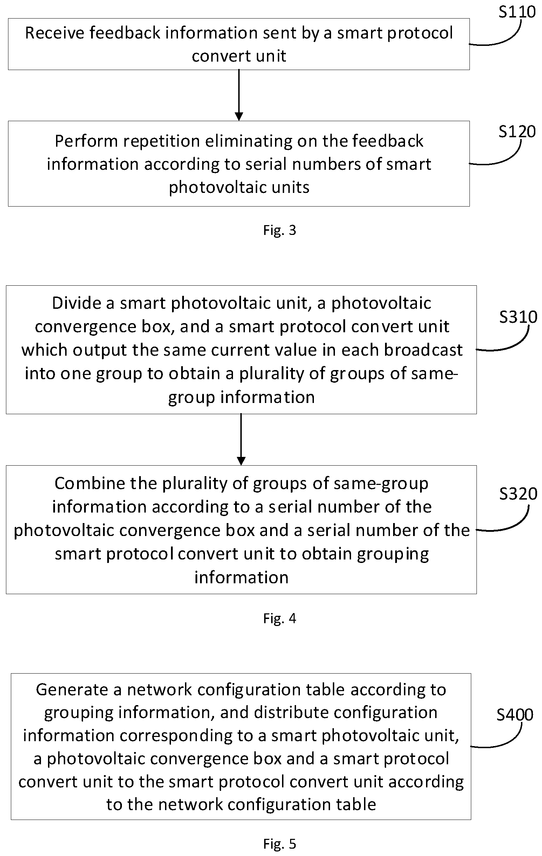

Refer to Fig. 3, which further illustrates step S100 in Fig. 2. Step S100 includes but is not limited to step S110 to step S120.

Step S110: feedback information sent by the smart protocol convert unit is received.

It needs to be noted that the feedback information is obtained by summarizing the serial numbers of the smart photovoltaic units, the serial number of the photovoltaic convergence box and the serial number of the smart protocol convert unit by the smart protocol convert unit.

In an embodiment, the smart protocol convert unit broadcasts and issues a network scanning command on the PLC network, the smart photovoltaic unit, the photovoltaic convergence box and the smart protocol convert unit respond to their own serial numbers, and the SPCU receives, summarize and send up all feedback information.

Step S120: repetition eliminating is performed on the feedback information according to the serial numbers of the smart photovoltaic units.

In an embodiment, the CSU performs repetition eliminating on the feedback information by using the serial numbers of the smart photovoltaic units as indexes, so as to avoid the situation that configuration information repeats when configuration information of the same node may be received by a plurality of SPCUs due to coupling of PLC signals.

Refer to Fig. 4, which further illustrates step S300 in Fig. 2. Step S300 includes but is not limited to step S310 to step S320.

Step S310: the smart photovoltaic unit, the photovoltaic convergence box, and the smart protocol convert unit which output the same current value in each broadcast are divided into one group to obtain a plurality of groups of same-group information.

In an embodiment, the smart photovoltaic unit, the photovoltaic convergence box, and the smart protocol convert unit which output the same current value in each broadcast are divided into one group to obtain the plurality of same-group information, so that preliminary grouping for the nodes in the photovoltaic system is achieved.

It needs to be noted that the same-group information includes the serial numbers of the smart photovoltaic units, the serial number of the photovoltaic convergence box and the serial number of the smart protocol convert unit as well as output current values of the smart photovoltaic units, an output current value of the photovoltaic convergence box and an output current value of the smart protocol convert unit.

Step S320: the plurality of groups of same-group information is combined according to the serial number of the photovoltaic convergence box and the serial number of the smart protocol convert unit to obtain grouping information.

In an embodiment, the same-group information with the same serial number of the photovoltaic convergence box and the same serial number of the smart protocol convert unit is combined so as to obtain the grouping information, grouping of the nodes in the photovoltaic system is completed, and accurate grouping for the nodes is achieved.

It needs to be noted that the grouping information includes a serial number of one photovoltaic convergence box, a serial number of one smart protocol convert unit and a serial number of at least one smart photovoltaic unit.

Refer to Fig. 5, which is a flowchart of a configuration method for a photovoltaic system provided by another embodiment of the present application. The configuration method for the photovoltaic system includes but is not limited to step S400.

Step S400: a network configuration table is generated according to the grouping information, and configuration information corresponding to the smart photovoltaic unit, the photovoltaic convergence box and the smart protocol convert unit is distributed to the smart protocol convert unit according to the network configuration table.

In an embodiment, the grouping information is recorded and stored, the network configuration table is generated according to the grouping information, the CSU distributes the configuration information corresponding to the smart photovoltaic unit, the photovoltaic convergence box and the smart protocol convert unit to the smart protocol convert unit through a CAN bus, so that synchronization of configurations of the nodes in the photovoltaic system is achieved.

It needs to be noted that the CSU distributes the network configuration table to the smart protocol convert unit through the CAN bus, then the smart protocol convert unit broadcasts and issues configuration information corresponding to all the nodes through the PLC network, and configuration synchronization from top to bottom is achieved.

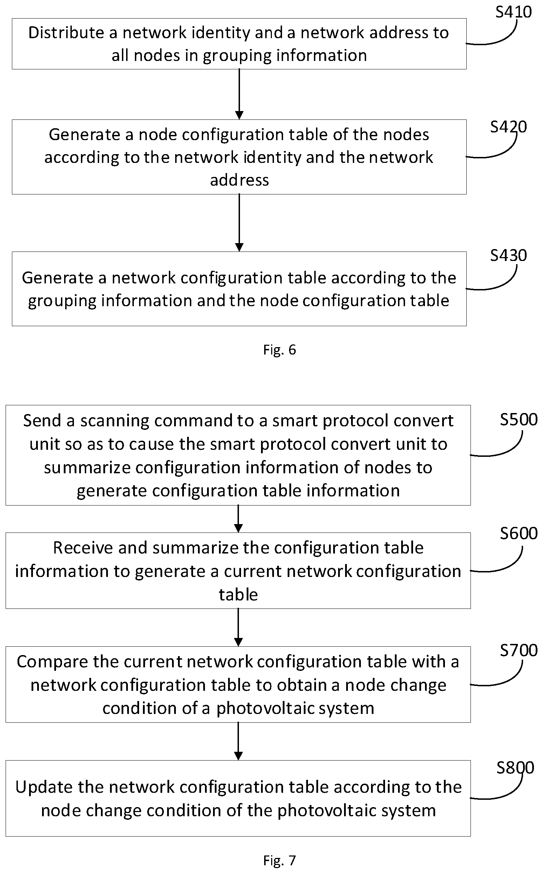

Refer to Fig. 6, which further illustrates step S400 in Fig. 5. Step S400 includes but is not limited to step S410 to step S430.

Step S410: a network identity and a network address are distributed to all the nodes in the grouping information.

It needs to be noted that the network identity is used to represent that the smart photovoltaic unit, the photovoltaic convergence box and the smart protocol convert unit are located in the same group, and the network address is used to represent identities of different nodes in the same group.

In an embodiment, the network identity and the network address are distributed to all the nodes in the grouping information. The network identity is personal area network identifier (Panld), the network address is a node address in a personal area network (PAN), all the nodes in the same group have the same network identity but different network addresses, and thus grouping management is facilitated.

Step S420: a node configuration table of the nodes is generated according to the network identity and the network address.

In an embodiment, after the network identity and the network address are distributed to the nodes, the node configuration table of all the nodes is generated according to an order of the network identity and the network address. The node configuration table includes serial numbers of the nodes, the network identity, the network address and other information.

S430: a network configuration table is generated according to the grouping information and the node configuration table.

In an embodiment, the network configuration table is generated according to the grouping information and the node configuration table, so grouping management for the nodes is implemented.

Refer to Fig. 7, which is a flowchart of a configuration method for a photovoltaic system provided by another embodiment of the present application. The configuration method for the photovoltaic system includes but is not limited to steps S500 to S800.

Step S500: a scanning command is sent to the smart protocol convert unit so as to cause the smart protocol convert unit to summarize configuration information of the nodes to generate configuration table information.

In an embodiment, a scanning command is sent to the smart protocol convert unit so as to cause the smart protocol convert unit to issue the scanning command through the PLC network and broadcast, each PLC node device responds to the command and broadcasts to respond to its own node configuration information, and the smart protocol convert unit summarizes the configuration information of the nodes to generate the configuration table information.

Step S600: the configuration table information is received and summarized to generate a current network configuration table.

In an embodiment, the configuration table information sent by the smart protocol convert unit is received and summarized to generate the current network configuration table, so recognition and updating for the nodes in the photovoltaic system are facilitated subsequently.

Step S700: the current network configuration table is compared with the network configuration table to obtain a node change condition of the photovoltaic system.

In an embodiment, the current network configuration table is compared with the network configuration table to obtain the node change condition of the photovoltaic system, so whether the nodes in the photovoltaic system are deleted, updated or replaced is judged, and real-time monitoring for the nodes in the photovoltaic system is achieved.

It may be understood that the current network configuration table is compared with the network configuration table to obtain difference information of the current network configuration table and the network configuration table, so whether the nodes in the photovoltaic system are changed is judged according to the difference information.

Step S800: the network configuration table is updated according to the node change condition of the photovoltaic system.

In an embodiment, the network configuration table is updated according to the node change condition of the photovoltaic system, so as to implement synchronous updating for the nodes in the photovoltaic system.

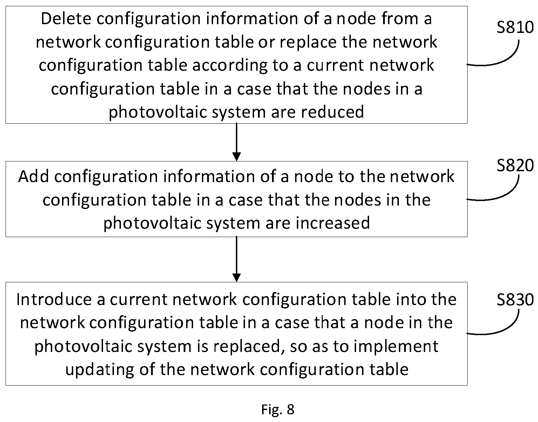

Refer to Fig. 8, which further illustrates step S800 in Fig. 7. Step S800 includes but is not limited to step S810 to step S830.

Step S810: configuration information of a node is deleted from the network configuration table or the network configuration table is replaced according to the current network configuration table in a case that the nodes in the photovoltaic system are reduced.

In an embodiment, when the nodes in the photovoltaic system are reduced, it indicates that there is no DSN of a node in the current network configuration table, but the DSN of the node remains in the network configuration table, so the configuration information of the node needs to be deleted from the network configuration table or the network configuration table is replaced according to the current network configuration table, and thus the configuration information of the node that does not exist is deleted.

It needs to be noted that reduction of the nodes in the photovoltaic system may be that a user removes or withdraws a node device, or the node device is stolen.

Step S820: configuration information of a node is added to the network configuration table in a case that the nodes in the photovoltaic system are increased.

In an embodiment, when the nodes in the photovoltaic system are increased, it indicates that there is a DSN of a node in the current network configuration table, but the DSN of the node does not exist in the network configuration table, so the configuration information of the node is added to the network configuration table.

It needs to be noted that increase of the nodes in the photovoltaic system may be that the user adds a node device, expands a capacity, etc., and whether a node is added to the photovoltaic system may be judged by using an alternate output checking method or a device actively informing method.

Step S830: the current network configuration table is introduced into the network configuration table in a case that a node in the photovoltaic system is replaced, so as to implement updating of the network configuration table.

In an embodiment, when the node in the photovoltaic system is replaced, it indicates that DSNs in the current network configuration table and the network configuration table are not the same, so the current network configuration table needs to be introduced into the network configuration table to implement updating of the network configuration table.

It may be understood that the DSNs in the current network configuration table and the network configuration table being not the same may be that a new CSU device is substituted, or a used CSU device is substituted.

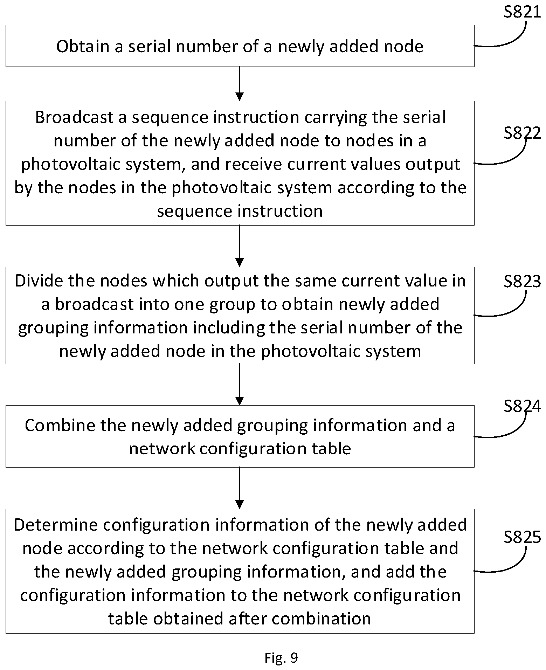

Refer to Fig. 9, which further illustrates step S820 in Fig. 8. Step S820 includes but is not limited to step S821 to step S824.

It needs to be noted that a newly added node is judged by using the alternate output checking method in step S821 to step S824.

Step S821: a serial number of a newly added node is obtained.

Step S822: a sequence instruction carrying the serial number of the newly added node is broadcast to the nodes in the photovoltaic system, and current values output by the nodes in the photovoltaic system according to the sequence instruction are received.

Step S823: the nodes which output the same current value in a broadcast are divided into one group to obtain newly added grouping information including the serial number of the newly added node in the photovoltaic system.

Step S824: the newly added grouping information and the network configuration table are combined.

Step S825: configuration information of the newly added node is determined according to the network configuration table and the newly added grouping information, and the configuration information is added to the network configuration table obtained after combination.

In an embodiment, the sequence instruction carrying the serial number of the newly added node is broadcast to the nodes in the photovoltaic system, the only node having the serial number of the newly added node in the photovoltaic system is instructed to open a power output, the other smart photovoltaic units close the power output, current values output by the nodes in the photovoltaic system according to the sequence instruction are received, the nodes which output the same current value in a broadcast are divided into one group so as to obtain the newly added grouping information including the serial number of the newly added node in the photovoltaic system, grouping combination is facilitated subsequently, the newly added grouping information and the network configuration table are combined, finally, configuration information of the newly added node is determined according to the network configuration table and the newly added grouping information and added to the network configuration table obtained after combination, synchronization of the configuration information of the newly added node is completed, and updating of the network configuration table is implemented.

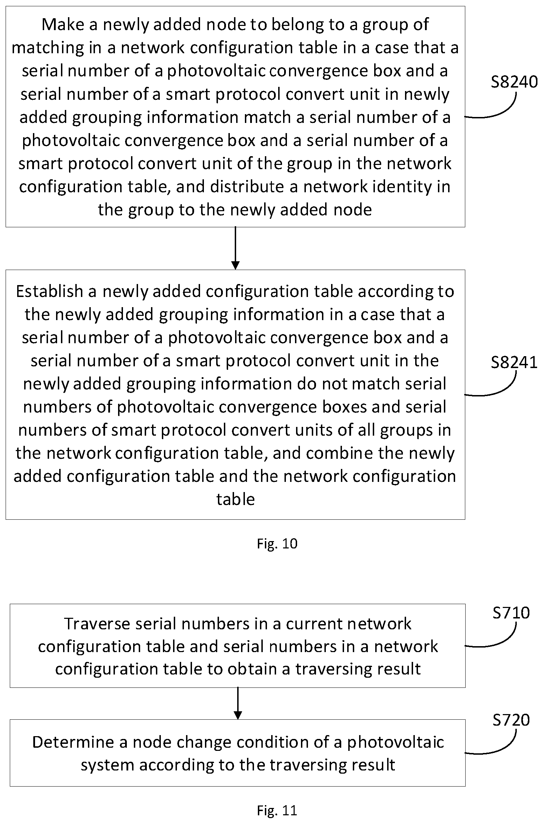

Refer to Fig. 10, which further illustrates step S824 in Fig. 9. Step S824 includes but is not limited to step S8240 to step S8241.

Step S8240: the newly added node is made to belong to a group of matching in the network configuration table in a case that a serial number of a photovoltaic convergence box and a serial number of a smart protocol convert unit in the newly added grouping information match a serial number of a photovoltaic convergence box and a serial number of a smart protocol convert unit of the group in the network configuration table, and a network identity in the group is distributed to the newly added node.

In an embodiment, when the serial number of the photovoltaic convergence box and the serial number of the smart protocol convert unit in the newly added grouping information match the serial number of the photovoltaic convergence box and the serial number of the smart protocol convert unit of the group in the network configuration table, it indicates that the newly added node belongs to the group in the network configuration table, so the newly added grouping information may be directly combined with the network configuration table, a network identity of the nodes in the same group is distributed to the newly added node, and thus same-group recognition and node information configuration for the newly added node are completed.

Step S8241: a newly added configuration table is established according to the newly added grouping information in a case that a serial number of a photovoltaic convergence box and a serial number of a smart protocol convert unit in the newly added grouping information do not match serial numbers of photovoltaic convergence boxes and serial numbers of smart protocol convert units of all groups in the network configuration table, and the newly added configuration table and the network configuration table are combined.

In an embodiment, when the serial number of the photovoltaic convergence box and the serial number of the smart protocol convert unit in the newly added grouping information do not match serial numbers of photovoltaic convergence boxes and serial numbers of smart protocol convert units of all the groups in the network configuration table, it indicates that the newly added node is not in the same group as the nodes of the network configuration table, the newly added configuration table needs to be established according to the newly added grouping information, the newly added configuration table and the network configuration table are combined, and same-group recognition and node information configuration for the newly added node are completed.

It may be understood that when the serial number of the photovoltaic convergence box and the serial number of the smart protocol convert unit in the newly added grouping information do not match serial numbers of photovoltaic convergence boxes and serial numbers of smart protocol convert units in the network configuration table, it may be that the serial number of the photovoltaic convergence box in the newly added grouping information does not match the serial numbers of the photovoltaic convergence boxes in the network configuration table, or the serial number of the smart protocol convert unit in the newly added grouping information does not match the serial numbers of the smart protocol convert units in the network configuration table, which is not specifically limited in the present embodiment.

Refer to Fig. 11, which further illustrates step S700 in Fig. 9. Step S700 includes but is not limited to step S710 to step S720.

Step S710: the serial numbers in the current network configuration table and the serial numbers in the network configuration table are traversed to obtain a traversing result.

Step S720: the node change condition of the photovoltaic system is determined according to the traversing result.

In an embodiment, the serial numbers in the current network configuration table and the serial numbers in the network configuration table are traversed, so that whether the network configuration table is changed is judged to obtain the traversing result, and thus the node change condition of the photovoltaic system is determined according to the traversing result, and the node change condition is judged accurately.

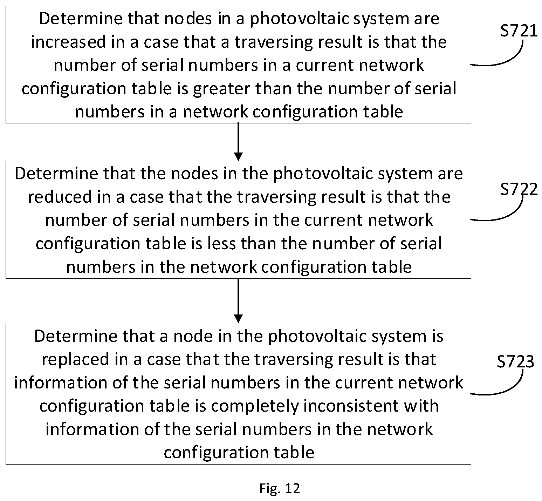

Refer to Fig. 12, which further illustrates step S720 in Fig. 11. Step S720 includes but is not limited to step S721 to step S723.

Step S721: it is determined that the nodes in the photovoltaic system are increased in a case that the traversing result is that the number of serial numbers in the current network configuration table is greater than the number of serial numbers in the network configuration table.

It needs to be noted that when the traversing result is that the number of serial numbers in the current network configuration table is greater than the number of serial numbers in the network configuration table, it indicates that the user adds a node, expands the capacity, etc.

Step S722: it is determined that the nodes in the photovoltaic system are reduced in a case that the traversing result is that the number of serial numbers in the current network configuration table is less than the number of serial numbers in the network configuration table.

It needs to be noted that when the traversing result is that the number of serial numbers in the current network configuration table is less than the number of serial numbers in the network configuration table, it indicates that the user deletes or withdraws a node, etc.

Step S723: it is determined that a node in the photovoltaic system is replaced in a case that the traversing result is that information of the serial numbers in the current network configuration table is completely inconsistent with information of the serial numbers in the network configuration table.

It needs to be noted that when the traversing result is that information of the serial numbers in the current network configuration table is completely inconsistent with information of the serial numbers in the network configuration table, it is determined that the node in the photovoltaic system is replaced by a new node or a used node.

In an embodiment, when the traversing result is that the number and the information of the serial numbers in the current network configuration table are the same as the number and the information of the serial numbers in the network configuration table, it indicates the network configuration table has no change, and an updating operation is not needed.

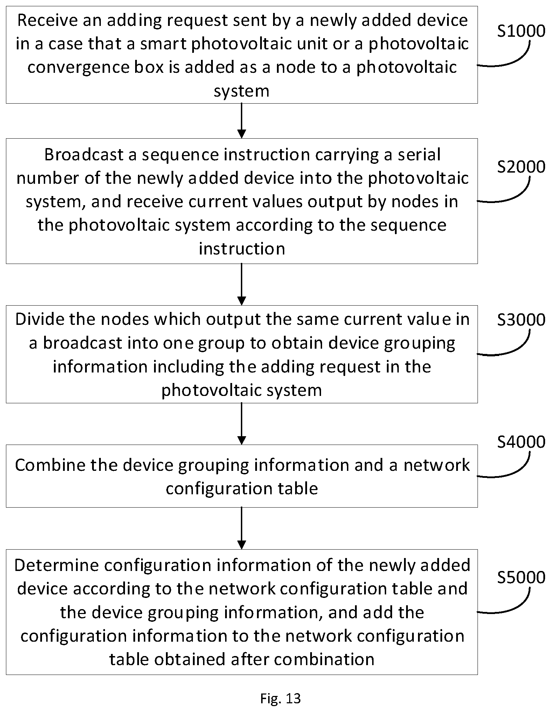

Refer to Fig. 13, which is a flowchart of a configuration method for a photovoltaic system provided by another embodiment of the present application. The configuration method for the photovoltaic system includes but is not limited to steps S1000 to S5000.

It needs to be noted that the newly added node is judged by using the device actively informing method in step S1000 to step S5000.

Step S1000: an adding request sent by a newly added device is received in a case that a smart photovoltaic unit or a photovoltaic convergence box is added as a node to the photovoltaic system.

It needs to be noted that the adding request carries a serial number of the newly added device.

Step S2000: a sequence instruction carrying the serial number of the newly added device is broadcast into the photovoltaic system, and current values output by the nodes in the photovoltaic system according to the sequence instruction are received.

Step S3000: the nodes which output the same current value in a broadcast are divided into one group to obtain device grouping information including the serial number of the newly added device in the photovoltaic system.

Step S4000: the device grouping information and the network configuration table are combined.

Step S5000: configuration information of the newly added device is determined according to the network configuration table and the device grouping information, and the configuration information is added to the network configuration table obtained after combination.

In an embodiment, in a case that the smart photovoltaic unit or the photovoltaic convergence box is added as a node to the photovoltaic system, the newly added device actively broadcast to inform the CSU or the SPCU of the adding request, the CSU receives the adding request sent by the newly added device, the sequence instruction carrying the serial number of the newly added device is broadcast into the photovoltaic system, the current values output by the nodes in the photovoltaic system according to the sequence instruction are received, the nodes which output the same current value in the broadcast are divided into one group, so as to obtain the device grouping information including the serial number of the newly added device in the photovoltaic system, finally, the device grouping information and the network configuration table are combined, the configuration information of the newly added device is determined according to the network configuration table and the device grouping information and added to the network configuration table obtained after combination, and thus updating for the newly added device and the network configuration table is implemented.

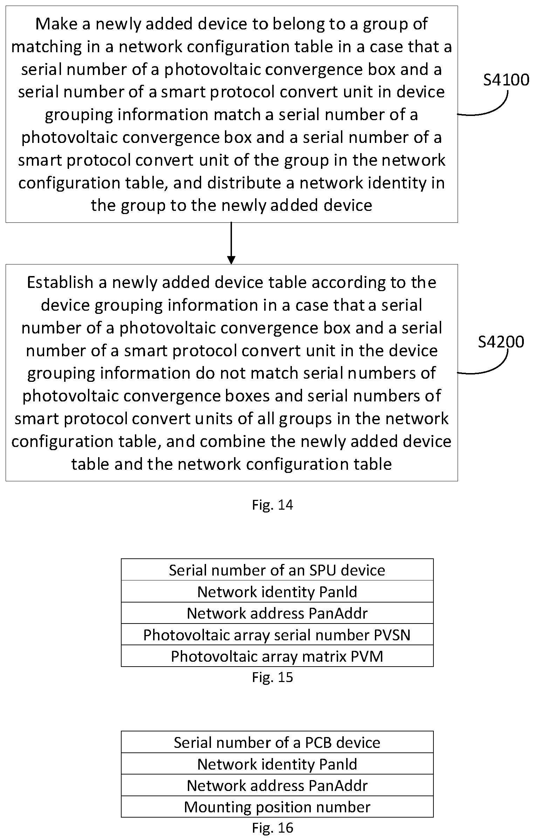

Refer to Fig. 14, which further illustrates step S4000 in Fig. 13. Step S4000 includes but is not limited to step S4100 to step S4200.

Step S4100: the newly added device is made to belong to a group of matching in the network configuration table in a case that a serial number of a photovoltaic convergence box and a serial number of a smart protocol convert unit in the device grouping information match a serial number of a photovoltaic convergence box and a serial number of a smart protocol convert unit of the group in the network configuration table, and a network identity in the group is distributed to the newly added device.

In an embodiment, when the serial number of the photovoltaic convergence box and the serial number of the smart protocol convert unit in the device grouping information match the serial number of the photovoltaic convergence box and the serial number of the smart protocol convert unit of the group in the network configuration table, it indicates that the newly added device is in the same group as the nodes in the network configuration table, so the newly added device is made to belong to the group of matching in the network configuration table, a network identity in the grouping information is distributed to the newly added device, and thus updating for the newly added device is implemented.

Step S4200: a newly added device table is established according to the device grouping information in a case that a serial number of a photovoltaic convergence box and a serial number of a smart protocol convert unit in the device grouping information do not match serial numbers of photovoltaic convergence boxes and serial numbers of smart protocol convert units of all groups in the network configuration table, and the newly added device table and the network configuration table are combined.

In an embodiment, when the serial number of the photovoltaic convergence box and the serial number of the smart protocol convert unit in the device grouping information do not match the serial numbers of the photovoltaic convergence boxes and the serial numbers of the smart protocol convert units of all the groups in the network configuration table, it indicates that the newly added device is not in the same group as the nodes in the network configuration table, the newly added device table is established according to the device grouping information, the newly added device table and the network configuration table are combined, and thus updating for the newly added device is implemented.

It may be understood that when the serial number of the photovoltaic convergence box and the serial number of the smart protocol convert unit in the device grouping information do not match the serial numbers of the photovoltaic convergence boxes and the serial numbers of the smart protocol convert units in the network configuration table, it may be that any of the serial numbers of the photovoltaic convergence boxes or the serial numbers of the smart protocol convert units are inconsistent, which is not specifically limited in the present embodiment.

For more clearly describing flows of the configuration method for the photovoltaic system, the following makes a description by taking specific examples.

### Example 1:

Example 1 shows a specific process of system management by a photovoltaic system after a node configuration table of nodes and a network configuration table are generated.

Configuration generation: generation of a configuration conforms to a certain rule. Panld is defined as an 8-digit grouping number, and an effective range is 1-254, whicn may correspond to a physical slot position of an SPCU. PanAddr is defined as a 16-bit address, wherein an upper 8-bit address is Panld of a group where it is located, and a lower 8-bit address is a node number in the group: numerical values 1-254 of the lower 8-bit represent 1-254 SPUs, a numerical value 0 represents a PCB, and a numerical value 255 represents the SPCU.

Configuration storage: all the nodes may locally save own node configuration tables; and meanwhile, a master node may also save configuration information of all belonging slave nodes. For example, the SPCU, as the master node in the group, also saves configurations of all slave nodes (SPU and PCB) in the group; and as for a CSU, though the CSU has no own PLC configuration information, but the CSU, as a system center supervisor, needs to save configuration information of all PLC nodes (SPU, PCB and SPCU) in a system.

Configuration synchronization: the configuration information of all the nodes in all layers have to remain consistent, for example, a DSN is used as an index. Besides, two synchronous mechanisms from top to bottom and from bottom to top are supported by the photovoltaic system:
- (1) From top to bottom: grouping configuration is completed on a netmanager software or the CSU to obtain a system network configuration table; then the CSU distributes each grouping configuration table information to each SPCU through a CAN/RS485 or another fieldbus; and the SPCU issues configuration information of each node to nodes such as the SPU and the PCB through the PLC network in a broadcast manner, for example, the DSN is used as index; and
- (2) From bottom to top: namely, a network auto-discovery technology. All new devices only have DSN information in a node configuration table when leaving factory, and an initial content of other information is blank. A new device, after accessing to a communication network, actively informs its own DSN in a broadcast manner and applies for a configuration from a system. A superior master node, after receiving the application, informs the CSU of generating configuration information of the node and adding to the network configuration table for improvement.
- (3) Periodic scanning: the CSU periodically issues a scanning command through each SPCU and a broadcast; each node, after receiving the command, broadcasts to respond to its own configuration information such as the DSN, Panld and PanAddr; each SPCU receives response information and summarizes the same to the CSU, the CSU generates a current network configuration table; and the CSU compares a difference of the current network table from the locally saved network configuration table, so as to recognize increase, reduction, etc. of a new node, and then performs updating of the network configuration.

### Example 2:

Example 2 is a specific process of automatic recognition and updating of a photovoltaic system.

When a CSU device or node is replaced, the following steps need to be performed:
- step 1: the CSU is powered on to run;
- step 2: the locally saved network configuration table is read;
- step 3: configuration table information of each SPCU is read and combined to obtain the current network configuration table;
- step 4: the network configuration table is compared with the current network configuration table;
- step 5: recognition of a configuration change: if a content of the network configuration table is empty, it indicates that a new CSU is substituted, or all DSNs in the two tables are different, it indicates that a used CSU is substituted; and
- step 6: automatic updating of the configuration: as for the two cases in the previous step, information of the current network configuration table is directly introduced into the network configuration table, and thus automatic updating of the configuration is completed.

When the SPCU and PCB nodes or the device are/is replaced, the following steps need to be performed:
- step 1: a node device is powered on to run;
- step 2: the node device reads the locally saved node configuration table;
- step 3: the CSU and all SPCUs normally run polling and management services; and
- step 4: if the SPCU or the CSU receives an active broadcasting informing message, it indicates that there is adding of a new PLC node device to the network, a "network configuration needs to be updated" identity is set, and it skips to step 7.

It needs to be noted that when new node devices leave factory, not all the new node devices have the only DSN in their configuration information, the new node device, after accessing to the network, may actively broadcast to inform of its own DSN and applies for a configuration from the system, and thus whether there is adding of a new device may be judged.
- step 5: if a change of a DSN is discovered when the CSU polls the SPCU, for example, inconsistent with a content of a whole local configuration table, it indicates that an SPCU is replaced by a used one in the network, and the "network configuration needs to be updated" identity is also set; and then it skips to step 7;
- step 6: if when the SPCU polls the PCB, it is discovered that the PCB does not respond, or the PCB responds but a DSN is changed, it indicates that a PCB is replaced by a used one or stolen in the network, and the "network configuration needs to be updated" identity is also set;
- step 7: if a timing scanning cycle set on the CSU is up, or the "network configuration needs to be updated" identity is set, query of a current network configuration flow is performed to obtain the current network configuration table; and otherwise, running ends;
- step 8: the current network configuration table is compared with the whole local configuration table, and if DSN information in the two tables is completely the same, it indicates that a network device has no change, and running ends;
- step 9: a "alternate output checking method" is run for performing same-group recognition;
- step 10: updating of the network configuration table: each SPCU uploads same-group recognition information to the CSU for summarizing and reference, and the CSU updates the locally saved network configuration table, and an updating principle also uses a device DSN as an index:
   - (1) a first device DSN is selected, and traversing and comparison for all configuration items in the current network configuration table and the network configuration table are started;
   - (2) an original DSN device: namely, the DSN exists in both the current network configuration table and the network configuration table. at the moment, the configuration information in the network configuration table remains unchanged;
   - (3) a newly added DSN device: when the new device is in the same group as a certain original device (it means that the new device is substituted or newly added or a capacity is expanded in the same group), group information of Panld and the like of the original device is duplicated to the new device; when no device is in the same group as the original device (it means that a user expands a capacity of the system with a new group of sub-system); and a grouping configuration table needs to be added, new device configuration information is generated according to a configuration generation rule and added to the whole configuration table; and
   - (4) a DSN device is reduced: the CSU actively gives an alarm and inform the user, and then determine whether the DSN node device is deleted from the local configuration table according to whether the user gets involved in processing; and if the user does not get involved in processing within a period of time, the system automatically deletes configuration information of the DSN node device; and
- step 11: synchronization: the CSU, after completing updating of the network configuration table, performs synchronous updating of the configuration information in sequence for each layer of devices such as the SPCU, the PCB and the SPU according to the principle of from top to bottom.

In an embodiment, through network scanning, the current network configuration table may be obtained through a query, a difference of the current network configuration table from the network configuration table is compared, automatic recognition of a network change may be implemented, moreover, by using the alternate output checking method, namely, the DSN is used as an index, each SPU device is designated alternately to independently output a current, checking is performed on the PCB and the SPCU, automatic same-group recognition may be implemented very simply and skillfully, and as for the newly added device in the network, configuration information of the device may be automatically added to the network configuration table through a same-group relationship and a configuration generation rule, and automatic updating of the network is implemented.

### Example 3:

The SPU, the PCB and the SPCU in the photovoltaic system carry different node configuration tables, and detailed information of the node configuration tables is as follows.

Refer to Fig. 15, which is a schematic diagram of a node configuration table provided by a specific example of the present application.

In an embodiment, the node configuration table of the SPU includes a DSN, a Panld, a PanAddr, a photovoltaic array serial number (PVSN), a photovoltaic array matrix (PVM) and other layout information of the present node.

It needs to be noted that the PVSN is an identification code of a photovoltaic array region, and the PVM is used to represent an identification of a coordinate position of a photovoltaic module in an array.

Refer to Fig. 16, which is a schematic diagram of a node configuration table provided by a specific example of the present application.

In an embodiment, the node configuration table of the PCB includes a DSN, a Panld, a PanAddr, and optional mounting position information of the present node.

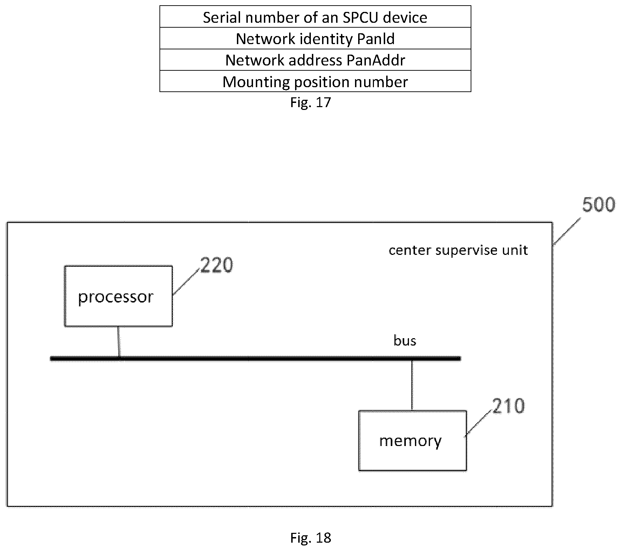

Refer to Fig. 17, which is a schematic diagram of a node configuration table provided by a specific example of the present application.

In an embodiment, the node configuration table of the SPCU includes a DSN, a Panld, a PanAddr, and optional mounting position information of the present node.

Besides, as shown in Fig. 18, an embodiment of the present application further provides a center supervise unit. The center supervise unit 500 includes a memory 210, a processor 220 and a computer program stored on the memory 210 and capable of being run on the processor 220.

The processor 220 and the memory 210 may be connected through a bus or in other manners.

The memory 210, as a non-transitory computer-readable storage medium, may be configured to store a non-transitory software program and a non-transitory computer-executable program. Besides, the memory 210 may include a high speed random access memory and may also include a non-transitory memory, for example, at least one disk storage device, a flash memory, or other non-transitory solid-state storage device. In some implementations, the memory 210 optionally includes memories remotely arranged relative to the processor 220, and these remote memories may be connected to the processor 220 through the network. Examples of the above network include but are not limited to the internet, an intranet, a local area network, a mobile communication network and their combination.

The configuration method for the photovoltaic system provided by the embodiment of the present application at least has the following beneficial effects: first, obtaining the serial numbers of the smart photovoltaic units; selecting the serial number of one smart photovoltaic unit each time as the target serial number, broadcasting the sequence instruction carrying the target serial number to the nodes in the photovoltaic system so as to cause each smart photovoltaic unit to compare the serial number thereof with the target serial number, start the smart photovoltaic unit corresponding to the target serial number and shut other smart photovoltaic units, and then receiving the current values output by the nodes in the photovoltaic system according to the sequence instruction until the serial numbers of all the smart photovoltaic units are traversed, so as to avoid a problem of omitting the smart photovoltaic units; and finally, dividing the smart photovoltaic unit, the photovoltaic convergence box, and the smart protocol convert unit which output the same current value in each broadcast into one group to obtain the grouping information of all the nodes in the photovoltaic system, so as to achieve accurate grouping for the photovoltaic system.

The above described embodiments are only exemplary, units described as separate components may be physically separated or not, namely, may be located in one place or may also be distributed onto a plurality of network units. Objectives of the solutions of the present embodiment may be implemented according to actual demands by selecting some or all modules.

Besides, an embodiment of the present application further provides a computer-readable storage medium, the computer-readable storage medium stores a computer-executable instruction, and the computer-executable instruction is performed by a center supervise unit or a controller, for example, performed by a center supervise unit in the above device embodiment, so as to cause the above center supervise unit to perform the configuration method for the photovoltaic system in the above embodiment.

Besides, an embodiment of the present application further provides a computer program product, including a computer program or a computer instruction, the computer program or the computer instruction is stored in a computer-readable storage medium, a center supervise unit of a computer device reads the computer program or the computer instruction from the computer-readable storage medium, and the center supervise unit performs the computer program or the computer instruction, so as to cause the computer device to perform the configuration method for the photovoltaic system in any one of the above embodiments.

Besides, the functional units in the embodiments of the present application may be integrated onto one processing unit, or each unit exists independently physically, or two units or more than two units may also be integrated into one unit. The above integrated units may be implemented in a form of hardware or in a form of hardware and software functional units.

Those ordinarily skilled in the art can understand all or some steps in the method disclosed above, and a system may be implemented as software, firmware, hardware or an appropriate combination thereof. Some physical components or all the physical components may be implemented as software executed by the center supervise unit, such as a central supervise unit, a digital signal center supervise unit or a micro center supervise unit, or implemented as hardware, or implemented as an integrated circuit, such as an application-specific integrated circuit. This type of software may be distributed on a computer readable medium, and the computer readable medium may include a computer storage medium (or a non-transitory medium) and a communication medium (or a transitory medium). It is known to those ordinarily skilled in the art that the term "computer storage medium" is included in a volatile and nonvolatile, and removable and non-removable medium used for storing information (such as computer readable instructions, a data structure, a program module or other data) and implemented in any method or technology. The computer storage medium includes but is not limited to an RAM, an ROM, an EEPROM, a flash memory or another memory technology, a CD-ROM, a digital versatile disc (DVD) or another optical disk memory, a magnetic cassette, a magnetic tape, a disk memory or another magnetic storage device, or any other medium capable of being used for storing expected information and accessible by a computer. Besides, it is known to those ordinarily skilled in the art that the communication medium usually includes computer readable instructions, a data structure, a program module or other data in a modulated data signal of such as a carrier wave or another transmission mechanism, and may include any information delivery medium.

## Claims

1. A configuration method for a photovoltaic system, wherein the photovoltaic system comprises smart photovoltaic units serving as nodes for networking, a photovoltaic convergence box and a smart protocol convert unit, and the configuration method comprises:
obtaining serial numbers of the smart photovoltaic units;
selecting the serial number of one smart photovoltaic unit each time as a target serial number, broadcasting a sequence instruction carrying the target serial number to nodes in the photovoltaic system, and receiving current values output by the nodes in the photovoltaic system according to the sequence instruction until the serial numbers of all the smart photovoltaic units are traversed, wherein the sequence instruction is used to instruct the only smart photovoltaic unit having the target serial number in the photovoltaic system to open a power output; and
dividing the smart photovoltaic unit, the photovoltaic convergence box, and the smart protocol convert unit which output the same current value in each broadcast into one group to obtain grouping information of all nodes in the photovoltaic system.

2. The configuration method for a photovoltaic system according to claim 1, wherein obtaining the serial numbers of the smart photovoltaic units comprises:
receiving feedback information sent by the smart protocol convert unit, wherein the feedback information is obtained by summarizing the serial numbers of the smart photovoltaic units, the serial number of the photovoltaic convergence box and the serial number of the smart protocol convert unit by the smart protocol convert unit; and
performing repetition eliminating on the feedback information according to the serial numbers of the smart photovoltaic units.

3. The configuration method for a photovoltaic system according to claim 1, wherein dividing the smart photovoltaic unit, the photovoltaic convergence box, and the smart protocol convert unit which output the same current value in each broadcast into one group to obtain grouping information of all nodes in the photovoltaic system comprises:
dividing the smart photovoltaic unit, the photovoltaic convergence box, and the smart protocol convert unit which output the same current value in each broadcast into one group to obtain a plurality of groups of same-group information; and
combining the plurality of groups of same-group information according to the serial number of the photovoltaic convergence box and the serial number of the smart protocol convert unit to obtain the grouping information.

4. The configuration method for a photovoltaic system according to claim 1, further comprising:
generating a network configuration table according to the grouping information, and distributing configuration information corresponding to the smart photovoltaic unit, the photovoltaic convergence box and the smart protocol convert unit to the smart protocol convert unit according to the network configuration table.

5. The configuration method for a photovoltaic system according to claim 4, wherein generating the network configuration table according to the grouping information comprises:
distributing a network identity and a network address to all the nodes in the grouping information, wherein the network identity is used to represent that the smart photovoltaic unit, the photovoltaic convergence box and the smart protocol convert unit are located in the same group, and the network address is used to represent identities of different nodes in the same group;
generating a node configuration table of the nodes according to the network identity and the network address; and
generating a network configuration table according to the grouping information and the node configuration table.

6. The configuration method for a photovoltaic system according to claim 4, wherein after generating the network configuration table according to the grouping information, and distributing configuration information corresponding to the smart photovoltaic unit, the photovoltaic convergence box and the smart protocol convert unit to the smart protocol convert unit according to the network configuration table, the method further comprises:
sending a scanning command to the smart protocol convert unit so as to cause the smart protocol convert unit to summarize configuration information of the nodes to generate configuration table information;
receiving and summarizing the configuration table information to generate a current network configuration table;
comparing the current network configuration table with the network configuration table to obtain a node change condition of the photovoltaic system; and
updating the network configuration table according to the node change condition of the photovoltaic system.

7. The configuration method for a photovoltaic system according to claim 6, wherein updating the network configuration table according to the node change condition of the photovoltaic system comprises:
deleting configuration information of a node from the network configuration table or replacing the network configuration table according to the current network configuration table in a case that the nodes in the photovoltaic system are reduced;
adding configuration information of a node to the network configuration table in a case that nodes in the photovoltaic system are increased; and
introducing the current network configuration table into the network configuration table in a case that a node in the photovoltaic system is replaced, so as to implement updating of the network configuration table.

8. The configuration method for a photovoltaic system according to claim 7, wherein adding the configuration information of the node to the network configuration table comprises:
obtaining a serial number of a newly added node;
broadcasting a sequence instruction carrying the serial number of the newly added node to the nodes in the photovoltaic system, and receiving current values output by the nodes in the photovoltaic system according to the sequence instruction;
dividing the nodes which output the same current value in a broadcast into one group to obtain newly added grouping information comprising the serial number of the newly added node in the photovoltaic system;
combining the newly added grouping information and the network configuration table; and
determining configuration information of the newly added node according to the network configuration table and the newly added grouping information, and adding the configuration information to the network configuration table obtained after combination.

9. The configuration method for a photovoltaic system according to claim 8, wherein combining the newly added grouping information and the network configuration table comprises:
making the newly added node belong to a group of matching in the network configuration table in a case that a serial number of a photovoltaic convergence box and a serial number of a smart protocol convert unit in the newly added grouping information match a serial number of a photovoltaic convergence box and a serial number of a smart protocol convert unit of the group in the network configuration table, and distributing a network identity in the group to the newly added node; and
establishing a newly added configuration table according to the newly added grouping information in a case that a serial number of a photovoltaic convergence box and a serial number of a smart protocol convert unit in the newly added grouping information do not match serial numbers of photovoltaic convergence boxes and serial numbers of smart protocol convert units of all groups in the network configuration table, and combining the newly added configuration table and the network configuration table.

10. The configuration method for a photovoltaic system according to claim 6, wherein comparing the current network configuration table with the network configuration table comprises:
traversing the serial numbers in the current network configuration table and the serial numbers in the network configuration table to obtain a traversing result; and
determining the node change condition of the photovoltaic system according to the traversing result.

11. The configuration method for a photovoltaic system according to claim 10, wherein determining the node change condition of the photovoltaic system according to the traversing result comprises:
determining that the nodes in the photovoltaic system are increased in a case that the traversing result is that the number of serial numbers in the current network configuration table is greater than the number of serial numbers in the network configuration table;
determining that the nodes in the photovoltaic system are reduced in a case that the traversing result is that the number of serial numbers in the current network configuration table is less than the number of serial numbers in the network configuration table; and
determining that a node in the photovoltaic system is replaced in a case that the traversing result is that information of the serial numbers in the current network configuration table is completely inconsistent with information of the serial numbers in the network configuration table.

12. The configuration method for a photovoltaic system according to claim 1, further comprising:
receiving an adding request sent by a newly added device in a case that a smart photovoltaic unit or a photovoltaic convergence box is added as a node to the photovoltaic system, wherein the adding request carries a serial number of the newly added device;
broadcasting a sequence instruction carrying the serial number of the newly added device into the photovoltaic system, and receiving current values output by the nodes in the photovoltaic system according to the sequence instruction;
dividing the nodes which output the same current value in a broadcast into one group to obtain device grouping information comprising the serial number of the newly added device in the photovoltaic system;
combining the device grouping information and the network configuration table; and
determining configuration information of the newly added device according to the network configuration table and the device grouping information, and adding the configuration information to the network configuration table obtained after combination.

13. The configuration method for a photovoltaic system according to claim 12, wherein combining the device grouping information and the network configuration table comprises:
making the newly added device belong to a group of matching in the network configuration table in a case that a serial number of a photovoltaic convergence box and a serial number of a smart protocol convert unit in the device grouping information match a serial number of a photovoltaic convergence box and a serial number of a smart protocol convert unit of the group in the network configuration table, and distributing a network identity in the group to the newly added device; and
establishing a newly added device table according to the device grouping information in a case that a serial number of a photovoltaic convergence box and a serial number of a smart protocol convert unit in the device grouping information do not match serial numbers of photovoltaic convergence boxes and serial numbers of smart protocol convert units of all groups in the network configuration table, and combining the newly added device table and the network configuration table.

14. A center supervise unit, comprising at least one processor and a memory configured to be in communication connection with the at least one processor; wherein the memory stores an instruction capable of being performed by the at least one processor, and the instruction is performed by the at least one processor so that the at least one processor can perform the configuration method for a photovoltaic system according to any one of claims 1 to 13.

15. A computer-readable storage medium, storing a computer-executable instruction, wherein the computer-executable instruction is used to cause a computer to perform the configuration method for a photovoltaic system according to any one of claims 1 to 13.
